# EUROPEAN PATENT SPECIFICATION

(11) **EP 1 987 126 B1**
(45) Date of publication and mention of the grant of the patent: **27.11.2013**
(21) Application number: 07712965.8
(22) Date of filing: 23.02.2007
(51) Int. Cl.: C12C 3/08, C12C 3/10

(54) **ANTIFOAM FROM HOP EXTRACT**
ANTISCHAUMMITTEL AUS HOPFENEXTRAKT
ANTIMOUSSE ISSU D'EXTRAIT DE HOUBLON

(30) Priority: 24.02.2006 GB 0603770
(43) Date of publication of application: 05.11.2008
(73) Proprietor: Botanix Limited, Tonbridge, Kent TN12 6DQ (GB)
(72) Inventor: MARRIOTT, Raymond, John, Northamptonshire NN16 8TZ (GB)
(74) Representative: Brookes Batchellor LLP
(86) International application number: PCT/GB2007/050082
(87) International publication number: WO 2007/096673

(56) References cited:
- DE-A1- 2 311 828
- US-A- 4 104 409
- US-A- 4 282 259
- US-A- 4 844 939
- US-A- 5 917 093
- US-A1- 2002 076 475
- US-A1- 2004 115 307
- US-B1- 6 242 038

## Description

### Field of the Invention

This invention relates to antifoam agents derived from hop extracts and especially the use of the antifoam agents in brewing.

### Background of the Invention

Hops have long been a key flavouring and bittering agent in the production of beer. More recently solvent and CO2 extraction of hops have provided hop components, especially the so-called a and β-acids, as more easily handled concentrates. The extraction of hop fats and waxes using liquid CO2 was first published by Sharpe, F. R., J. Inst. Brew., 1980, 86, 234-241. The subsequent move to supercritical CO₂ extraction has increased the relative level of hop lipids (fats and oils) and waxes obtained in the CO₂ extracts.

In the brewing industry, the composition of wort and beer makes both products susceptible to foaming during processing. This is conventionally controlled either by mechanical means or by the addition of proprietary antifoam compositions, especially antifoam compositions based on polymethylsiloxanes.

DE 23 11 828 A1 discloses a method for preventing gushing of beer, i.e. excessive foaming, by the addition of unsaturated fatty acids at any stage of the brewing process. US-B1-6 242 038 attributes over-foaming inhibiting effects to lipidic hop extracts that are free from alpha, beta and isoalpha acids.

US2004/115307 discloses effervescent hop extract tablets used as a kettle additive. US-A-4 844 939 discloses a hop extract having isoalpha acids removed and US2002/076475A1 discloses a method where alpha acids and beta acids are separated from a carbon dioxide hop extract.

US-A-5917093 discloses apparatus for extracting hops with carbon dioxide. Alpha acids and beta acids are removed from the initial extract by precipitation and hop oils are carried off with the evaporated carbon dioxide.

It is an object of this invention to provide a foam suppressing agent that is based on natural products and suitable for use in brewing.

### Summary of the Invention

The present invention is based on the finding that the resins, lipids (fats and/or oils) and waxes that are the residue of solvent or CO₂ extraction of hops, form an effective foam suppressant, which is especially suitable for brewing due to its origin in a natural material which is an established beer additive.

Accordingly in one aspect the present invention provides an anti-foaming agent comprising a mixture of hop lipids, waxes and hard resins, which may be used in solid form or as an aqueous emulsion, depending on the temperature of the system in which foaming occurs.

In another aspect the invention provides the use of a mixture of hop lipids, waxes and hard resins as an anti-foaming agent, especially in brewing.

More specifically the invention provides use of a mixture of hop lipids, waxes and hard resins as an anti-foaming agent in brewing by addition of the mixture in solid form to the brew kettle or by addition of the mixture as an aqueous emulsion to the fermenter.

### Detailed Description of the Invention

The composition of hop wax has been published by Delanghe et al., J.Inst. Brew., 1969, (75), 445-449 and a similar paper by the same author appears in J. Sci. Food Agric., 1969, 20(10), 579-580. There is also a relevant paper by Knorr, F., Brauereitechniker. 1973, 25(17), 122 - 123.

The present invention makes use of what are known as the hard resins and lipids (fixed oils) and waxes, that is the resins, waxes, fats and oils, that remain at the completion of hop extraction procedures. The present invention includes antifoam products comprising hard resins and fixed oils and waxes in the form obtainable by any extraction procedure. Extractions may conveniently be carried out using for example organic solvents, such as ethanol, or using either liquid or supercritical CO₂.

Accordingly the antifoam agent is composed of a mixture of hard resins, waxes and lipids (oils/fats), from which has previously been removed α-acids, optionally β-acids, and essential oils which can cause unwanted addition of bitterness or flavour.

The product typically contains, by weight:

| | |
|---|---|
| hard (polymerised) resins (fraction soluble in methanol) | 10 - 25% |
| oils and waxes (fraction soluble in hexane) | 75 - 90% |

The hexane soluble fraction is typically made up of, by weight:

| | |
|---|---|
| fixed oils | 15 - 40% |
| waxes | 60 - 85% |
| β-acids | 0 - 10%. |

With this information it is feasible to extract the methanol-soluble and hexane-soluble target materials directly from hops. However a preferred extraction procedure starting from hops is shown below, which makes used of current procedures of choice for extracting desirable hop acids and essential oils from hops. The resulting product, found by the present invention to be an effective antifoam agent, is a dark green-brown waxy extract, which is composed of a mixture of hard resins, waxes and lipids.

| |
|---|
| **Hops** |
| ↓ |
| Pelleting |
| ↓ |
| **Pellets** |
| ↓ |
| Extraction with ethanol or CO₂ (supercritical or liquid) |
| ↓ |
| **Pure Resin Extract** |
| ↓ |
| Extraction of α-acids → Isomerised hop extract |
| ↓ |
| **Beta acid oil** |
| ↓ |
| Extraction of β-acids → β-acid solution |
| ↓ |
| **Oil Extract** |
| ↓ |
| Molecular distillation → Hop essential oil |
| ↓ |
| **Hard resins, fixed oils, waxes** |

The residue of any procedure for solvent extraction of hops (seeded or unseeded) may be used. The proportions of the components of the residue (and of the content of α,β-acids and essential oils) will vary depending on the solvent used for extraction. In the commercial production of hop extract products, carbon dioxide is now the solvent of choice, and the residue from liquid carbon dioxide extraction has been found to be especially effective for use as a foam suppressant in accordance with this invention.

The procedures for pelletising hops and for extraction of α-acids, β-acids and essential oils from the initial extract are all well known in the hop processing art.

The α-acids and β-acids are typically removed separately by aqueous washes at different pH values - see for example US Patent 4844939 relating to recovery of components from carbon dioxide hop extractions (the entire disclosure of US 4844939 is incorporated herein by reference). Essential oils are preferably extracted by molecular distillation (i.e. distillation at very low pressure), but steam distillation is a further option.

In an alternative procedure the alpha acid content of the initial extract is isomerised in situ, so that the alpha acids are actually extracted as the more desirable iso-alpha acids.

The residue of hard resins, fixed oils, waxes produced using the extractions described above may be added as an antifoam base directly to the brew kettle in the manufacture of beer, suitably at a rate of 2 - 10 g/hl (20 - 100 ppm). To use this product in the fermenter, where the temperature is lower and there is much less effective mixing, it is preferably dispersed in water as an aqueous emulsion before use.

An emulsion may be prepared by mixing the antifoam base with a suitable emulsifier (approved for food use) such as one of the fatty acid esters of sorbitan polyethoxylates (or polysorbates) commercially available under the trade name TWEEN. Polysorbate 80 (Tween™ 80 - polyoxyethylene sorbitan monooleate) is effective at a weight ratio of 1:1 to 4:1 (antifoam base:Tween 80) for dispersing this blend in water. The resulting emulsion is stable and may be used at a rate of 10-40 g/hl in the fermenter.

In trial brews, the antifoam hop extract of this invention has been shown to be an effective substitute for conventionally used silicone antifoams, providing similar or better antifoam effect in comparative testing. In particular there is often an improved effect relative to silicones in the first 48 hours of treatment, which may be a stage with heavy foaming. Also an improved fermentation rate has been observed using the hop antifoam.

The invention is further illustrated in the following Examples.

### Example 1 - preparation of antifoam base

Hops of the variety 'Target' were pelletised and subjected to extraction using liquid carbon dioxide at a pressure of 6.3 Mpa (63 bar) and a temperature of 10°C for 7 hours. The resin extract obtained was treated to isomerise the alpha acids content by the addition of magnesium carbonate, and the resultant iso-alpha acids removed by washing with aqueous KOH at pH 7.5 to leave "beta acid oil". The beta acids were removed from the beta acid oil by a further wash with aqueous KOH to leave the oil extract. The oil extract was distilled at 1.33x10⁻² Hpa (1 x 10⁻² torr) and 90°C to remove the essential oils, leaving a residue of hard resins, fixed oils and waxes.

This residue contained by weight 15% methanol soluble fraction and 85% hexane soluble fraction, of which 30% was hop lipids (triglycerides) and was found to be an effective antifoam base when utilized in brewing processes to suppress foaming.

### Example 2 - use of antifoam base

A 10 hl kettle with an internal heater was filled with 8 hl of 100% malt liquor and 10 g/hl hop extract containing 50% α-acids. This was brought to a rolling boil. 5 g/hl of the hop antifoam base prepared in Example 1 was added and the boil continued for 90 minutes. No over-foaming of the kettle was observed, in contrast to the situation without antifoam. After fermentation and maturation the product was assessed for both taste and aroma and no "off-notes" detected in the final product.

### Example 3 - use of antifoam base

A 300 hl kettle with an external boiler was charged with 250 hl liquor produced with by weight 79% Optic, 9% Cara malt, 3% Wheat Flour and 9% Glucoplus 361 (glucose/maltose syrup). 15 kg hop pellets (12% α-acids) were added and brought to a rolling boil. 10 g/hl of hop antifoam base of Example 1 was added and the boil continued for 90 minutes. No over-foaming of the kettle was observed, in contrast to the situation without antifoam. Fermentation proceeded normally and after maturation the product was assessed for both taste and aroma and no "off-notes" were detected.

### Example 4 - use of antifoam emulsion

A hop antifoam emulsion was prepared by blending by weight 75% of the hop antifoam base of Example 1 with 25% of Tween 80, and adding water and stirring to form an emulsion containing 10% by weight of the base in water.

A commercial lager beer with original extract of 16.9° plato was fermented in a conical fermenter with the addition of either 10 ppm silicone antifoam (control) or 400 ppm hop antifoam emulsion (40 ppm base component) for 96 hours. The final extract was 2.12° plato in the control and 1.88° plato in the trial fermentation. The antifoam effects of the silicone and the hop antifoam were similar, but the fermentation rate was higher in the trial with the hop antifoam, reaching a final alcohol content of 8.2% v/v compared with 8.08% v/v for the control. The final pH of the control fermentation was 4.07 and the trial was pH 3.96. After maturation the beers were compared and proved to be similar in flavour and aroma.

### Example 5 - use of antifoam emulsion

A commercial light lager beer with original extract of 16.0° plato was subject to an attenuated fermentation in a conical fermenter with the addition of either 10 ppm silicone antifoam (control) or 400 ppm hop antifoam emulsion of Example 4 (40 ppm active base component) for 150 hours. The final extract was 6.1° plato in both the control and in the trial fermentation. The antifoam effects of the silicone and the hop antifoam were similar. The fermentation rate was identical in the trial with the hop antifoam and the control with both reaching a final alcohol content of 2.4% v/v. and the final pH of the both trials was 4.24. After maturation the beers were packed and then compared and proved to be similar in both taste and aroma with no "off-notes" detected in the trial with added hop antifoam

### Example 6 - use of antifoam emulsion

A commercial top fermented porter was fermented in an open top fermenter with the addition of either 10 ppm silicone antifoam (control) or 400 ppm antifoam emulsion of Example 4 (40 ppm active base component) for 120 hours. The trial with the hop antifoam showed the more vigorous fermentation rate but foam levels remained below that of the control throughout the fermentation. Crucially the foam level remained below 20% of the wort volume for the first 48 hours of fermentation. After maturation the beers were compared and found to be similar in both taste and aroma with no "off-notes" detected in the trial with added hop antifoam.

### Example 7 - use of antifoam emulsion

Ale wort with original gravity of 1.050 was subject to fermentation in a 10 hl open fermenter with or without the addition of 200 ppm hop antifoam emulsion (20 ppm active base component) for 96 hours. The final gravity of the control was 1.012 and **the** batch with added antifoam was 1.009. No overfoaming was observed throughout fermentation in the trial with antifoam but the foam level in the control fermentation reached 30 cm.

After maturation the beers were packed and then compared and proved to be similar in both taste and aroma with no "off-notes" detected in the trial with added hop antifoam. Foam stability of both products was assessed in triplicate using both the Rudin and NIBEM methods. The foam stability of the control was 259 NIBEM (seconds) or 184 seconds (Rudin 75 mm) and the trial with added antifoam was 279 NIBEM (seconds) or 189 seconds (Rudin 75 mm)

### Industrial Applicability

The hop antifoam base comprising the hard resins, fixed oils and waxes obtained by solvent extraction of pelletised hops, and typically obtained by extraction of alpha acids, beta acids and essential oils from the whole hop extract, can be effectively utilized in brewing processes to suppress foaming.

The antifoam hop extract of this invention provides an effective natural substitute for silicone antifoam in brewing processes; with similar or better antifoam effect. The improved fermentation rate which has been observed appears to arise because the presence of the hop lipids has a positive effect on yeast metabolism.

The hop antifoam base can be used in any type of brewing kettle configuration. It is preferably warmed before addition to the kettle to make it more fluid. The product can then be added directly to the kettle. Typical dose rate is 2 - 5 g/hl depending on the degree of foam control required. Products with high levels of foam producing substances such as hop acids and proteins will require dose rates at the higher end of this range. It is important that the active components are removed completely so that the foam stability in the finished beer is not compromised. This natural kettle antifoam will be removed with the trub and will not carry over into the wort stream.

For commercial use, the hop antifoam base is packaged in containers for transport to and storage at the place of use, typically accompanied by product safety sheets and instructions for use. The base materials is conveniently packed in 10kg plastic pails, but alternative packaging systems can be used as convenient or appropriate for the user.

The hop antifoam emulsion can be used in conical fermenters and also in top fermentation. It is compatible with other types of aqueous antifoam emulsions such as those based on silicones. The hop antifoam emulsion can be added to the wort as the fermenter is filled or with the pitching yeast. A further addition can be made to the surface of the fermentation mid-way through the fermentation if required. Typical dose rate is 10 - 40 g/hl depending on the product. Products with high levels of foam producing substances such as hop acids and proteins will require dose rates at the higher end of this range. It is important that the active components are removed completely from the finished beer. Yeast removes the majority of the active components by adsorption on to the cell wall and any remainder can removed by filtration.

For commercial use, the hop antifoam emulsion is packaged in containers for transport to and storage at the place of use, typically accompanied by product safety sheets and instructions for use. The emulsion material is conveniently packed in 20 litre polydrums or in 1,000 litre IBC's (intermediate bulk containers), but alternative packaging systems can be used as convenient or appropriate for the user.

There are no health hazards known for the antifoam products of this invention. Hops and hop extracts have GRAS status.

## Claims

1. An anti-foaming agent comprising a mixture of lipids, waxes and hard resins obtainable by removing α-acids, optionally β-acids, and essential oils from a solvent extract of hops.

2. An anti-foaming agent according to claim 1, comprising by weight:
| | |
|---|---|
| hard (polymerised) hop resins (fraction soluble in methanol) | 10 - 25% |
| hop oils and waxes (fraction soluble in hexane) | 75 - 90%. |

3. An anti-foaming agent according to claim 2, in which the hexane soluble fraction comprises by weight:
fixed oils 15 - 40%; waxes 60-85%; β-acids 0-10 %.

4. An anti-foaming agent according to any one of claims 1 to 3 obtainable by removing alpha acids by isomerisation in situ and extraction as iso alpha acids.

5. An anti-foaming agent according to any one of claims 1 to 4, obtainable by extraction of hops with an organic solvent.

6. An anti-foaming agent according to any one of claims 1 to 4, obtainable by extraction of hops with liquid or supercritical CO₂.

7. An anti-foaming agent according to any one of claims 1 to 6, in the form of an aqueous emulsion.

8. An anti-foaming agent according to any one of claims 1 to 7, packaged for transport or storage with instructions for use.

9. Use of a mixture of lipids, waxes and hard resins obtainable by removing α-acids, optionally β-acids, and essential oils from a solvent extract of hops as an anti-foaming agent.

10. Use according to claim 9 in brewing processes.

11. Use according to claim 10, by addition of the mixture in solid form to the brew kettle.

12. Use according to claim 10, by addition of the mixture as an aqueous emulsion to the fermenter.

13. A method of preparing an antifoam agent from hops, which comprises subjecting hops to solvent extraction to obtain a hop extract; removing alpha acids, optionally beta acids, and essential oils from the hop extract; and packaging the residue with instructions for use as an antifoam agent.

14. A method according to claim 13 in which the hops are pelletised before solvent extraction.

15. A method according to claim 13 or 14 In which the residue is emulsified In water before packaging.

16. A method according to claim 13, 14 or 15 in which the hops are extracted with liquid or supercritical carbon dioxide.

## Patentansprüche

1. Antischaummittel, das eine Mischung aus Lipiden, Wachsen und harten Harzen umfasst, die durch Entfernen von α-Säuren, optional β-Säuren und ätherischen Ölen aus einem Lösungsmittelextrakt von Hopfen erhältlich ist.

2. Antischaummittel nach Anspruch 1, das in Gewicht umfasst:
Harte (polymerisierte) Hopfenharze (Fraktion löslich in Methanol) 10 - 25%
Hopfenöle und Wachse (Fraktion löslich in Hexan) 75 - 90%.

3. Antischaummittel nach Anspruch 2, in welchem die hexanlösliche Fraktion in Gewicht umfasst:
Fette Öle 15 - 40%; Wachse 60 - 85%; ß-Säuren 0 - 10%.

4. Antischaummittel nach einem der Ansprüche 1 bis 3, das durch Entfernen von alpha-Säuren durch in situ Isomerisation und Extraktion als iso alpha-Säuren erhältlich ist.

5. Antischaummittel nach einem der Ansprüche 1 bis 4, das durch Extraktion von Hopfen mit einem organischen Lösungsmittel erhältlich ist.

6. Antischaummittel nach einem der Ansprüche 1 bis 4, das durch Extraktion von Hopfen mit flüssigem oder superkritischem CO₂ erhältlich ist.

7. Antischaummittel nach einem der Ansprüche 1 bis 6 in der Form einer wässrigen Emulsion.

8. Antischaummittel nach einem der Ansprüche 1 bis 7, das zum Transport oder zur Aufbewahrung mit Instruktionen zur Verwendung verpackt ist.

9. Verwendung einer Mischung von Lipiden, Wachsen und harten Harzen, die durch Entfernen von α-Säuren, optional ß-Säuren und ätherischen Ölen aus einem Lösungsmittelextrakt von Hopfen erhältlich ist, als ein Antischaummittel.

10. Verwendung nach Anspruch 9 in Brauprozessen.

11. Verwendung nach Anspruch 10, durch Zugabe der Mischung in fester Form zu dem Braukessel.

12. Verwendung nach Anspruch 10, durch Zugabe der Mischung als eine wässrige Emulsion zu dem Fermenter.

13. Verfahren zur Herstellung eines Antischaummittels aus Hopfen, welches Unterwerfen von Hopfen einer Lösungsmittelextraktion, um ein Hopfenextrakt zu erhalten; Entfernen von alpha-Säuren, optional beta-Säuren, und ätherischen Ölen von dem Hopfenextrakt; und Verpacken des Rests mit Instruktionen zur Verwendung als ein Antischaummittel umfasst.

14. Verfahren nach Anspruch 13, in welchem der Hopfen vor der Lösungsmittelextraktion pelletiert wird.

15. Verfahren nach Anspruch 13 oder 14, in welchem der Rest vor dem Verpacken in Wasser emulgiert wird.

16. Verfahren nach Anspruch 13, 14 oder 15, in welchem der Hopfen mit flüssigem oder superkritischem Kohlenstoffdioxid extrahiert wird.

## Revendications

1. Agent anti-mousse comprenant un mélange de lipides, de cires et de résines dures susceptible d'être obtenu par élimination d'α-acides, facultativement de β-acides, et d'huiles essentielles à partir d'un extrait de solvant de houblon.

2. Agent anti-mousse selon la revendication 1, comprenant en poids:
des résines dures (polymérisées) de houblon (fraction soluble dans le méthanol) 10 - 25% des huiles et des cires de houblon (fraction soluble dans l'hexane) 75 - 90%.

3. Agent anti-mousse selon la revendication 2, dans lequel la fraction soluble dans l'hexane comprend en poids:
des huiles fixes 15 - 40%; des cires 60-85%; des β-acides 0-10%.

4. Agent anti-mousse selon l'une quelconque des revendications 1 à 3 susceptible d'être obtenu par élimination d'acides alpha par isomérisation in situ et extraction en tant qu'acides isoalpha.

5. Agent anti-mousse selon l'une quelconque des revendications 1 à 4, susceptible d'être obtenu par extraction de houblon avec un solvant organique.

6. Agent anti-mousse selon l'une quelconque des revendications 1 à 4, susceptible d'être obtenu par extraction de houblon avec du CO₂ liquide ou supercritique.

7. Agent anti-mousse selon l'une quelconque des revendications 1 à 6, sous la forme d'une émulsion aqueuse.

8. Agent anti-mousse selon l'une quelconque des revendications 1 à 7, emballé pour le transport ou le stockage avec des instructions pour utilisation.

9. Utilisation d'un mélange de lipides, de cires et de résines dures susceptibles d'être obtenus par enlèvement d'α-acides, facultativement de β-acides, et d'huiles essentielles à partir d'un extrait de solvant de houblon en tant qu'agent anti-mousse.

10. Utilisation selon la revendication 9 dans des procédés de brassage.

11. Utilisation selon la revendication 10, par addition du mélange à l'état solide à la cuve de brassage.

12. Utilisation selon la revendication 10, par addition du mélange en tant qu'émulsion aqueuse à la cuve de fermentation.

13. Procédé de préparation d'un agent anti-mousse à partir de houblon, qui comprend la soumission du houblon à l'extraction au solvant pour obtenir un extrait de houblon; l'élimination d'acides alpha, facultativement d'acides bêta, et d' huiles essentielles de l'extrait de houblon ; et le conditionnement du résidu avec des instructions pour une utilisation en tant qu'agent anti-mousse.

14. Procédé selon la revendication 13 dans lequel le houblon est granulé avant extraction au solvant.

15. Procédé selon la revendication 13 ou 14 dans lequel le résidu est émulsionné dans l'eau avant emballage.

16. Procédé selon la revendication 13, 14 ou 15, dans lequel le houblon est extrait avec du dioxyde de carbone liquide ou supercritique.
